# EUROPÄISCHE PATENTANMELDUNG

(11) **EP 4 403 588 A1**
(43) Veröffentlichungstag der Anmeldung: **24.07.2024**
(21) Anmeldenummer: 23151870.5
(22) Anmeldetag: 17.01.2023
(51) Int. Cl.: C08G 18/44, B29C 44/56, C08J 9/40, E04B 1/68, E06B 1/62

(54) **ERZEUGNIS, UMFASSEND EINEN POLYURETHANSCHAUMSTOFF**

(71) Anmelder: Hanno-Werk GmbH & Co. KG, 30880 Laatzen (DE)
(72) Erfinder: HOHLFELD, Andreas, 31832 Springe (DE)
(74) Vertreter: Patentanwälte Thömen & Körner

(57) **Zusammenfassung**

Die Erfindung betrifft ein Erzeugnis, das einen Polyurethanschaumstoff umfasst, der zumindest teilweise, vorzugsweise homogen mit einer Imprägniermasse imprägniert ist.

## Beschreibung

Die Erfindung betrifft ein Erzeugnis, das einen Polyurethanschaumstoff umfasst, der zumindest teilweise mit einer Imprägniermasse, vorzugsweise homogen, imprägniert ist, und ein Erzeugnis, nämlich ein Fugendichtungsband, das einen oder mehrere in Längsrichtung verlaufende Abschnitte aus Schaumstoff umfasst, wobei wenigstens ein Abschnitt aus Polyurethanschaumstoff ausgebildet ist.

Erzeugnisse in Form von Fugendichtungsbänder, die einen Schaumstoff, insbesondere einen Polyurethanschaumstoff, aufweisen, sind zum Abdichten insbesondere gegen Luftzug und Schlagregen beispielsweise aus der DE 19641415 C2, der DE 20009674 U1 oder der WO 2012/167762 A1 bekannt und werden in der Bautechnik zum Abdichten insbesondere von Bauteilen, beispielsweise von Fenster- und Türrahmen, gegenüber einem Mauerwerk, beispielsweise einer Gebäudewandöffnung, oder einer Bewegungsfuge in einer Fassade verwendet. Vorgenannte Fugendichtungsbänder weisen wenigstens eine Membranschicht auf. Weitere Fugendichtungsbänder, die keine Membranschicht aufweisen, sind beispielsweise aus der DE 1 000 946 A, DE 40 20 230 A1 oder der DE 34 07 995 A1 bekannt.

Ausgehend von diesem Stand der Technik liegt der Erfindung die Aufgabe zugrunde, ein einen vorzugsweise imprägnierten Polyurethanschaumstoff umfassendes Erzeugnis bereitzustellen, das eine gegenüber dem Stand der Technik verbesserte CO₂-Bilanz aufweist.

Die CO₂-Bilanz eines Produktes, auch CO₂-Fußabdruck eines Produktes genannt, wird in einem Memorandum mit dem Titel "Product Carbon Footprint" des Bundesministeriums für Umwelt, Naturschutz und Reaktorsicherheit, des Umweltbundesamts und des Öko-Instituts e.V. (Dezember 2009) als "Bilanz der Treibhausgasemissionen entlang des gesamten Lebenszyklus eines Produkts in einer definierten Anwendung und bezogen auf eine definierte Nutzeinheit" definiert. Der Lebenszyklus eines Produkts umfasst dabei die gesamte Wertschöpfungskette von Herstellung und Transport der Rohstoffe und Vorprodukte über Produktion und Distribution bis hin zu Nutzung, Nachnutzung und Entsorgung.

Diese Aufgabe wird bei einem Erzeugnis durch die Merkmale des Anspruchs 1 oder 2 gelöst. Weiterbildungen und vorteilhafte Ausgestaltungen der Erfindung ergeben sich aus der nachfolgenden Beschreibung sowie den Unteransprüchen.

Bei einem Erzeugnis, das einen Polyurethanschaumstoff umfasst, der zumindest teilweise mit einer Imprägniermasse, vorzugsweise homogen, imprägniert ist, ist erfindungsgemäß vorgesehen, dass der Polyurethanschaumstoff zumindest teilweise auf Basis von Polyolen hergestellt ist, die zumindest teilweise auf Basis wenigstens eines nachwachsenden Rohstoffs und/oder zumindest teilweise auf Basis wenigstens eines Rezyklats erhalten werden, und/oder dass der Polyurethanschaumstoff zumindest teilweise auf Basis eines zumindest teilweise aus CO₂ hergestellten Polyols hergestellt ist.

Dadurch, dass CO₂ zumindest teilweise zur Herstellung des Polyols verwendet wird, in dieses also quasi integriert wird, und das so hergestellte Polyol dann der Herstellung eines Polyurethanschaums dient, der erfindungsgemäß im imprägnierten Zustand ein neuartiges Erzeugnis ergibt, wird die CO₂-Bilanz des Erzeugnisses verbessert. Das letztendlich so im imprägnierten Polyurethanschaum eingebundene CO₂ kann in bestimmter Weise von den Treibhausgasemissionen des Erzeugnisses abgezogen werden.

Die Herstellung von Polyolen zumindest teilweise aus CO₂ ist für sich bekannt. So bietet die Covestro AG, Leverkusen, Deutschland, beispielsweise unter dem Namen CARDYON^{®} ein Polyol mit einem Kohlendioxidanteil von bis zu 20 % zur Herstellung flexibler Polyurethanschäume an.

Eine verbesserte CO₂-Bilanz ergibt sich auch, wenn der Polyurethanschaumstoff zumindest teilweise auf Basis von Polyolen hergestellt ist, die zumindest teilweise auf Basis wenigstens eines nachwachsenden Rohstoffs und/oder zumindest teilweise auf Basis wenigstens eines Rezyklats erhalten werden.

Eine verbesserte CO₂-Bilanz ergibt sich vorteilhaft auch dann, wenn wenigstens eine Komponente der Imprägniermasse zumindest teilweise auf Basis von Polyolen ausgebildet ist, die zumindest teilweise auf Basis wenigstens eines nachwachsenden Rohstoffs und/oder zumindest teilweise auf Basis wenigstens eines Rezyklats erhalten werden, und/oder wobei wenigstens eine Komponente der Imprägniermasse zumindest teilweise auf Basis von zumindest teilweise aus CO₂ hergestellten Polyolen ausgeführt ist. So kann es vorteilhaft sein, wenn die Imprägniermasse ein Bindemittel auf Polyurethanbasis umfasst, wobei das Polyurethan unter Verwendung der vorgenannten Polyole hergestellt ist.

Erfindungsgemäße Erzeugnisse lassen sich vielfältig einsetzen, vorzugsweise für die Fugenabdichtung im Hochbau, insbesondere zur Abdichtung von Fassadenfugen, Fenster- oder Tür-Anschlussfugen, oder für Brandschutzabschottungen. Ein weiterer Einsatzbereich sind vorzugsweise Anschlussfugen im Tiefbau, insbesondere Dehnungsfugen in Fahrbahnen und Parkhäusern oder dergleichen. Ein anderer Einsatzbereich betrifft vorzugsweise den Maschinenbau, insbesondere die Schalldämmung oder die Schalldämpfung, oder den Fahrzeugbau, insbesondere Automobile, Busse oder Schienenfahrzeuge.

Dem Fachmann sind verschiedene Verfahren zum Imprägnieren eines Schaumstoffs, beispielsweise eines Polyurethanschaumstoffs, mit einer Imprägniermasse bekannt. Üblicherweise dient die Imprägnierung dazu, den Schaumstoff oder das nachfolgend beschriebene Schaumstoff umfassende Fugendichtungsband mit einem verzögerten Rückstellverhalten auszubilden. Zusätzlich oder alternativ kann der Schaumstoff oder das den Schaumstoff aufweisende Fugendichtungsband durch das Imprägnieren mit einer Imprägniermasse mit weiteren Funktionalitäten, insbesondere einer wasserabweisenden Wirkung, einer Luftdichtheit, einem Flammschutz, einer Farbe oder einem UV-Schutz, ausgerüstet werden.

Bei einem Erzeugnis, nämlich einem Fugendichtungsband, das einen oder mehrere in Längsrichtung verlaufende Abschnitte aus Schaumsoff umfasst, wobei wenigstens ein Abschnitt aus Polyurethanschaumstoff ausgebildet ist, ist erfindungsgemäß vorgesehen, dass der Polyurethanschaumstoff zumindest teilweise auf Basis von Polyolen ausgeführt ist, die zumindest teilweise auf Basis wenigstens eines nachwachsenden Rohstoffs und/oder zumindest teilweise auf Basis wenigstens eines Rezyklats erhalten werden, und/oder dass der Polyurethanschaumstoff zumindest teilweise auf Basis von zumindest teilweise aus CO₂ hergestellten Polyolen ausgeführt ist.

Dadurch, dass CO₂ zumindest teilweise zur Herstellung des Polyols verwendet wird, in dieses also quasi integriert wird, und das so hergestellte Polyol dann der Herstellung eines Polyurethanschaums dient, der erfindungsgemäß das neuartiges Fugendichtungsband ergibt, wird die CO₂-Bilanz des Fugendichtungsbandes verbessert. Das letztendlich so im Polyurethanschaum eingebundene CO₂ kann in bestimmter Weise von den Treibhausgasemissionen des Fugendichtungsbandes abgezogen werden.

Es kann vorteilhaft sein, wenn der Schaumstoff wenigstens eines Abschnitts zumindest teilweise, mit einer Imprägniermasse, vorzugsweise homogen mit dieser, imprägniert ist, wobei wenigstens eine Komponente der Imprägniermasse zumindest teilweise auf Basis von Polyolen ausgebildet ist, die zumindest teilweise auf Basis wenigstens eines nachwachsenden Rohstoffs und/oder zumindest teilweise auf Basis wenigstens eines Rezyklats erhalten werden, und/oder wobei wenigstens eine Komponente der Imprägniermasse zumindest teilweise auf Basis von zumindest teilweise aus CO₂ hergestellten Polyolen ausgebildet ist.

Auch dadurch wird eine verbesserte CO₂-Bilanz erreicht.

Es kann vorteilhaft sein, wenn der mit den erfindungsgemäßen Polyolen produzierte Polyurethanschaumstoff ein Polyurethanweichschaumstoff ist.

Es kann vorteilhaft sein, wenn der Anteil des im Polyol integrierten CO₂ 5 - 40 % beträgt.

Es kann vorteilhaft sein, wenn der mit den erfindungsgemäßen Polyolen produzierte Polyurethanschaumstoff als Rohschaumstoff ein Raumgewicht von 20 bis 50 kg/m³ aufweist.

Es kann vorteilhaft sein, wenn der mit den erfindungsgemäßen Polyolen produzierte Polyurethanschaumstoff imprägniert ein Trockenraumgewicht von 30 bis 150 kg/m³ aufweist.

Es kann vorteilhaft sein, wenn die Raumgewicht des mit den erfindungsgemäßen Polyolen produzierten Polyurethanschaumstoffs als nicht komprimierter Rohschaumstoff und das Trockenraumgewicht des mit den erfindungsgemäßen Polyolen produzierten imprägnierten und nicht komprimierten Polyurethanschaumstoffs gleich oder unterschiedlich sind, wobei das vorgenannte Raumgewicht und das vorgenannte Trockenraumgewicht vorzugsweise im Verhältnis 2:3 bis 3:15 zueinander stehen und/oder wobei die Differenz der vorgenannten Raumgewichte zwischen 0 und 120 kg/m³ liegt.

Es kann vorteilhaft sein, wenn der mit den erfindungsgemäßen Polyolen produzierte Polyurethanschaumstoff als nicht komprimierter Rohschaumstoff eine Stauchhärte von 2 bis 6 kPa, vorzugsweise von 3 bis 5 kPa, bestimmt gemäß DIN EN ISO 3386, aufweist.

Es kann vorteilhaft sein, wenn der mit den erfindungsgemäßen Polyolen produzierte Polyurethanschaumstoff imprägniert und nicht komprimiert eine Stauchhärte von 2 bis 10 kPa, bestimmt gemäß DIN EN ISO 3386, aufweist.

Es kann vorteilhaft sein, wenn die Stauchhärte des mit den erfindungsgemäßen Polyolen produzierten Polyurethanschaumstoffs als nicht komprimierter Rohschaumstoff und die Stauchhärte des mit den erfindungsgemäßen Polyolen produzierten imprägnierten und nicht komprimierten Polyurethanschaumstoffs gleich oder unterschiedlich sind, wobei die vorgenannten Stauchhärten vorzugsweise im Verhältnis 1:1 bis 1:2 zueinander stehen und/oder wobei die Differenz der vorgenannten Stauchhärten zwischen 0 und 5 kPa liegt.

Es kann vorteilhaft sein, wenn der mit den erfindungsgemäßem Polyolen produzierte Polyurethanschaumstoff als nicht komprimierter Rohschaumstoff oder als imprägnierter und nicht komprimierter Schaumstoff eine Luftdurchlässigkeit von 500 bis 1500 l/m²s, bestimmt gemäß DIN EN ISO 9237 bei einer Schaumdicke des Prüfkörpers von 10 mm, einer Prüffläche des Schaumkörpers von 20 cm² und bei einem Prüfdruck von 100 Pa als Prüfbedingungen, aufweist.

Es kann vorteilhaft sein, wenn der mit den erfindungsgemäßen Polyolen produzierte Polyurethanschaumstoff als nicht komprimierter Rohschaumstoff oder als imprägnierter und nicht komprimierter Schaumstoff eine Luftdurchlässigkeit von 100 bis 400 l/dm²min, bestimmt gemäß DIN EN ISO 7231 Verfahren A bei einer Rohschaumdicke des Prüfkörpers von 50 mm, einer Prüffläche des Schaumkörper von 100 cm² und bei einem Prüfdruck von 100 Pa als Prüfbedingungen, aufweist.

Es kann vorteilhaft sein, wenn die Luftdurchlässigkeit des mit den erfindungsgemäßen Polyolen produzierten Polyurethanschaumstoffs als nicht komprimierter Rohschaumstoff und die Luftdurchlässigkeit des mit den erfindungsgemäßen Polyolen produzierten imprägnierten und nicht komprimierten Polyurethanschaumstoffs gleich oder unterschiedlich sind, wobei die vorgenannten Luftdurchlässigkeiten vorzugsweise im Verhältnis 1:1 bis 2:1 zueinander stehen und/oder wobei die Differenz der vorgenannten Luftdurchlässigkeiten zwischen 0 und 750 l/m²s, bestimmt gemäß DIN EN ISO 9237 bei einer Schaumdicke des Prüfkörpers von 10 mm, einer Prüffläche des Schaumkörpers von 20 cm² und bei einem Prüfdruck von 100 Pa als Prüfbedingungen, liegt.

Es kann vorteilhaft sein, wenn die Luftdurchlässigkeit des mit den erfindungsgemäßen Polyolen produzierten Polyurethanschaumstoffs als nicht komprimierter Rohschaumstoff und die Luftdurchlässigkeit des mit den erfindungsgemäßen Polyolen produzierten imprägnierten und nicht komprimierten Polyurethanschaumstoffs gleich oder unterschiedlich sind, wobei die vorgenannten Luftdurchlässigkeiten vorzugsweise im Verhältnis 1:1 bis 2:1 zueinander stehen und/oder wobei die Differenz der vorgenannten Luftdurchlässigkeiten zwischen 0 und 200 l/dm²min, bestimmt gemäß DIN EN ISO 7231-Verfahren A bei einer Schaumdicke des Prüfkörpers von 50 mm, einer Prüffläche des Schaumkörpers von 100 cm² und bei einem Prüfdruck von 100 Pa als Prüfbedingungen, liegt.

Es kann vorteilhaft sein, wenn der mit den erfindungsgemäßen Polyolen produzierte Polyurethanschaumstoff als Rohschaumstoff eine Zugfestigkeit von 50 bis 300 kPa, bestimmt gemäß DIN EN ISO 1798, aufweist.

Es kann vorteilhaft sein, wenn der mit den erfindungsgemäßen Polyolen produzierte Polyurethanschaumstoff imprägniert und nicht komprimiert eine Zugfestigkeit von 50 bis 400 kPa, bestimmt gemäß DIN EN ISO 1798, aufweist.

Es kann vorteilhaft sein, wenn die Zugfestigkeit des mit den erfindungsgemäßen Polyolen produzierten Polyurethanschaumstoffs als nicht komprimierter Rohschaumstoff und die Zugfestigkeit des mit den erfindungsgemäßen Polyolen produzierten imprägnierten und nicht komprimierten Polyurethanschaumstoffs gleich oder unterschiedlich sind, wobei die vorgenannten Zugfestigkeiten vorzugsweise im Verhältnis 1:1 bis 1:2 zueinander stehen und/oder wobei die Differenz der vorgenannten Zugfestigkeit zwischen 0 und 200 kPa liegt.

Es kann vorteilhaft sein, wenn der mit den erfindungsgemäßen Polyolen produzierte Polyurethanschaumstoff als Rohschaumstoff eine Bruchdehnung von 50 bis 300 %, bestimmt gemäß DIN EN ISO 1798, aufweist.

Es kann vorteilhaft sein, wenn der mit den erfindungsgemäßen Polyolen produzierte Polyurethanschaumstoff imprägniert und nicht komprimiert eine Bruchdehnung von 50 bis 400 %, bestimmt gemäß DIN EN ISO 1798, aufweist.

Es kann vorteilhaft sein, wenn die Bruchdehnung des mit den erfindungsgemäßen Polyolen produzierten Polyurethanschaumstoffs als nicht komprimierter Rohschaumstoff und die Bruchdehnung des mit den erfindungsgemäßen Polyolen produzierten imprägnierten und nicht komprimierten Polyurethanschaumstoffs gleich oder unterschiedlich sind, wobei die vorgenannten Bruchdehnungen vorzugsweise im Verhältnis 1:1 bis 1:2 zueinander stehen und/oder wobei die Differenz der vorgenannten Bruchdehnungen vorzugsweise zwischen 0 und 200 % liegt.

Es kann vorteilhaft sein, wenn der mit den erfindungsgemäßen Polyolen produzierte Polyurethanschaumstoff als Rohschaumstoff einen Druckverformungsrest von 0 bis 25 %, vorzugsweise von ≤ 7 %, bestimmt gemäß DIN EN ISO 1856-Verfahren C bei 70 °C, 50% und 22 Stunden als Prüfbedingungen, aufweist.

Es kann vorteilhaft sein, wenn der mit den erfindungsgemäßen Polyolen produzierte Polyurethanschaumstoff imprägniert einen Druckverformungsrest von 0 bis 25 %, vorzugsweise von ≤ 20 %, bestimmt gemäß DIN EN ISO 1856-Verfahren C bei 100 °C, 90% und 4 Stunden als Prüfbedingungen, aufweist.

Es kann vorteilhaft sein, wenn der Druckverformungsrest des mit den erfindungsgemäßen Polyolen produzierten Polyurethanschaumstoffs als nicht komprimierter Rohschaumstoff und der Druckverformungsrest des mit den erfindungsgemäßen Polyolen produzierten imprägnierten und nicht komprimierten Polyurethanschaumstoffs gleich oder unterschiedlich sind, wobei die vorgenannten Druckverformungsreste vorzugsweise im Verhältnis 1:1 bis 1:2 zueinander stehen und/oder wobei die Differenz der vorgenannten Druckverformungsreste vorzugsweise zwischen 0 und 12 % liegt, wobei der Druckverformungsreste gemäß DIN EN ISO 1856-Verfahren C bei 100 °C, 90% und 4 Stunden als Prüfbedingungen zu bestimmen ist.

Bei der Imprägniermasse handelt es sich vorzugsweise um eine Polymerlösung oder Polymerdispersion. Diese Lösung oder Dispersion kann bekannte Füllstoffe und/oder Hilfsstoffe, beispielsweise Schichtsilikate, Tonmineralien, Metalloxide, Metallhydroxide, Glaskugeln, thermoexpandierbare Substanzen, Ruß, Farbpigmente, Flammschutzmittel, Hydrophobierungsmittel und dergleichen, enthalten.

Es kann vorteilhaft sein, wenn die Imprägniermasse auf Basis einer Acrylat-Dispersion ausgebildet ist. Mit anderen Worten kann es vorteilhaft sein, wenn die Imprägniermasse ein Bindemittel, vorzugsweise eine wässrige Dispersion auf Basis eines Acrylsäureesters, besonders bevorzugt eine wässrige Dispersion eines Polyacrylsäurebutylesters umfasst.

Für einige Anwendungen kann es auch vorteilhaft sein, wenn die Imprägniermasse ein Bindemittel auf Polyurethanbasis umfasst.

Für gewisse Anwendungen kann es auch vorteilhaft sein, wenn die Imprägniermasse ein Bindemittel auf Wachsbasis umfasst.

Für bestimmte Anwendungen kann es auch vorteilhaft sein, wenn die Imprägniermasse ein Bindemittel auf Bitumenbasis umfasst.

Durch das Imprägnieren wird das Raumgewicht des imprägnierten Schaumstoffs nach seiner Trocknung im Vergleich zu einem nicht imprägnierten Rohschaumstoff erhöht.

Üblicherweise wird der Rohschaumstoff mit einer Imprägniermasse getränkt, indem der Rohschaumstoff in die Imprägniermasse eingetaucht wird, so dass die Imprägniermasse, bevorzugt mit Hilfe von Tauch- oder Quetschwalzen, in die Poren des Schaumstoffs eindringt und diesen vollständig durchdringt. Die Imprägniermasse füllt also die Poren des Schaumstoffs aus. Vorzugsweise wird hierzu ein offenzelliger oder teilweise geschlossenzelliger oder offenzelliger Schaumstoff verwendet. Nach dem Imprägnieren wird der Schaumstoff mittels mindestens einer Walze, insbesondere mit einem Walzenpaar, gewalzt. Mittels der wenigstens einen Walze wird ein Teil der Imprägniermasse aus dem Schaumstoffkörper bis zum gewünschten Imprägnierungsgrad aus- bzw. abgequetscht. Durch Variation des Walzendruckes kann der Imprägnierungsgrad, das heißt die Menge der vom Schaumstoff aufgenommenen Imprägniermasse, variiert werden. Anschließend wird der Schaumstoff getrocknet und geschnitten.

Es ist auch möglich, den Schaumstoff unter Druck bzw. im Vakuum, mittels Injektionsnadeln oder mit Hilfe einer Sprüheinrichtung zu imprägnieren bzw. zu beschichten.

Es kann vorteilhaft sein, wenn das Fugendichtungsband zwei Längsseiten sowie eine im Einbauzustand des Fugendichtungsbandes an die eine Fugenflanke angrenzende Oberseite und eine im Einbauzustand des Fugendichtungsbandes an die gegenüberliegende Fugenflanke angrenzende Unterseite aufweist. Die Breite des Fugendichtungsbandes ist somit der Abstand zwischen zwei Längsseiten.

Es kann vorteilhaft sein, wenn das Fugendichtungsband eine oder mehrere Membranschichten aufweist.

Es kann vorteilhaft sein, wenn zumindest eine Membranschicht feuchtevariabel ist.

Es kann vorteilhaft sein, wenn zumindest eine Membranschicht in Längsrichtung zumindest teilweise zwischen Oberseite und Unterseite des Fugendichtungsbandes, vorzugsweise zwischen zwei Abschnitten aus Schaumstoff, verläuft, vorzugsweise derart, dass diese im Einbauzustand des Fugendichtungsbandes von einem sich in der Fuge ausbildenden Wasserdampfdiffusionsstrom zumindest größtenteils durchströmbar ist, diese also entsprechend quer zur Diffusionsrichtung angeordnet ist.

Für bestimmte Einsatzzwecke kann es vorteilhaft sein, wenn alle Schaumstoffabschnitte des Fugendichtungsbandes den gleichen Schaumstoff, also eine Polyurethanschaumstoff auf Basis wenigstens eines nachwachsenden Rohstoffs und/oder zumindest teilweise auf Basis eines zumindest teilweise aus CO₂ hergestellten Polyols produziert ist, aufweisen. Es kann vorteilhaft sein, wenn in diesem Fall die den Schaumstoff aufweisenden Abschnitte zumindest teilweise eine gleiche oder eine unterschiedliche Höhe aufweisen. Auch kann es vorteilhaft sein, wenn die Schaumstoffabschnitte eine gleiche oder zumindest teilweise eine unterschiedliche Imprägnierung aufweisen.

Für andere Einsatzzwecke kann es vorteilhaft sein, wenn die Schaumstoffabschnitte des Fugendichtungsbandes zumindest teilweise einen unterschiedlichen Schaumstoff aufweisen. Es kann vorteilhaft sein, wenn in diesem Fall die den Schaumstoff aufweisenden Abschnitte zumindest teilweise eine gleiche oder eine unterschiedliche Höhe aufweisen. Auch kann es vorteilhaft sein, wenn die Schaumstoffabschnitte eine gleiche oder zumindest teilweise eine unterschiedliche Imprägnierung aufweisen.

Eine Unterteilung in verschiedene Abschnitte kann sich beispielsweise durch wenigstens eine im Schaumstoff vorhandene Trennschicht, beispielsweise in Form einer Klebstoff- oder Membranschicht, oder durch ein unterschiedliches Höhenprofil ergeben. Es kann vorteilhaft sein, wenn ein oder mehr als ein Schaumstoffabschnitt oder Schaumstoffelement mit der wenigstens einen Substanz ausgerüstet ist.

Es kann vorteilhaft sein, wenn mehrere Dichtbereiche innerhalb eines Fugendichtungsbandes vorgesehen sind.

Es kann vorteilhaft sein, wenn wenigstens zwei Schaumstoffabschnitte unterschiedliche Raumgewichte aufweisen.

Es kann vorteilhaft sein, wenn jeder Schaumstoffabschnitt einen Funktionsbereich aufweist, vorzugsweise einen ersten nach außen schlagregendichten Bereich, einen zweiten wärmedämmenden sowie schallmindernden Bereich und einen dritten nach innen luftdichten Bereich.

Es kann vorteilhaft sein, wenn der mit den erfindungsgemäßen Polyolen produzierte Polyurethanschaumstoff ein überwiegend offenzelliger oder teilweise geschlossenzelliger oder offenzelliger Schaumstoff ist.

Es kann vorteilhaft sein, wenn wenigstens eine Membranschicht zumindest teilweise auf Basis von Polyolen hergestellt ist, die zumindest teilweise auf Basis wenigstens eines nachwachsenden Rohstoffs und/oder zumindest teilweise auf Basis wenigstens eines Rezyklats erhalten werden, und/oder dass wenigstens eine Membranschicht zumindest teilweise auf Basis von zumindest teilweise aus CO₂ hergestellten Polyolen produziert ist.

Es kann vorteilhaft sein, wenn wenigstens eine Membranschicht aus Klebstoff, vorzugsweise aus einem Acrylathaftklebstoff, aus einem Polyurethanklebstoff oder einem Gemisch aus Acrylathaftklebstoff und Polyurethanklebstoff gebildet ist.

Es kann vorteilhaft sein, wenn das Fugendichtungsband komprimierbar, vorzugsweise in Rollenform vorkomprimiert ist.

Es kann vorteilhaft sein, wenn das Fugendichtungsband vorzugsweise aufgrund der Imprägnierung verzögert rückstellfähig ist.

Es kann vorteilhaft sein, wenn die Dicke des Fugendichtungsbandes im nicht komprimierten Zustand zwischen 10 mm und 100 mm, vorzugsweise zwischen 18 mm bis 60 mm, beträgt.

Es kann vorteilhaft sein, wenn das Fugendichtungsband zur Abdichtung von Fugen zwischen zusammengefügten Bauelementen im Hausbau, insbesondere zwischen Wandöffnungen einer Außenwand und Fenster- oder Türrahmen, vorzugsweise ohne Zuhilfenahme zusätzlicher Fugenbändern oder Hinterfüllmaterialien, einsetzbar ist.

Es kann vorteilhaft sein, wenn das Fugendichtungsband zur Abdichtung von Fugen in einem Wärmedämmverbundsystem einsetzbar ist.

Es kann vorteilhaft sein, wenn das Fugendichtungsband zur Abdichtung von Fugen in einem an einer Vorwandmontagezarge einsetzbar ist.

Es kann von Vorteil sein, wenn das Fugendichtungsband einseitig selbstklebend ausgebildet ist. Die Seite kann vollflächig mit einer Selbstklebeschicht oder nicht vollflächig mit einer oder mehr als einer Selbstklebebahn beschichtet sein, welche vorzugsweise mit einem lösbaren Silikonpapier abgedeckt ist.

Es kann vorteilhaft sein, wenn der Fugendurchlasskoeffizient des Fugendichtungsbandes, bestimmt nach DIN 18542:2020, nicht imprägniert und/oder imprägniert a < 1 m³/(h m (daPa)ⁿ] beträgt.

Es kann vorteilhaft sein, wenn die Schlagregendichtheit des nicht imprägnierten Fugendichtungsbands, bestimmt nach DIN 18542:2020, < 600 Pa beträgt. Es kann vorteilhaft sein, wenn die Schlagregendichtheit des imprägnierten Fugendichtungsbandes, bestimmt nach DIN 18542:2020, > 600 Pa beträgt.

Es kann vorteilhaft sein, wenn das imprägnierte Fugendichtungsband eine Temperaturwechselbeständigkeit zwischen -20°C und + 80°C, bestimmt nach DIN 18542:2020 bei 100% rF, 85 °C, 20 h als Prüfbedingungen, aufweist.

Es kann vorteilhaft sein, wenn die Wärmeleitfähigkeit des Fugendichtungsbandes nicht imprägniert < 0,035 W/mK und imprägniert < 0,045 W/mK beträgt. Die Wärmeleitfähigkeit - ausgedrückt durch die Wärmeleitzahl (λ) in Watt pro Meter mal Kelvin (W/mK) beschreibt das Vermögen eines Materials, thermische Energie mittels Wärmeleitung zu transportieren. Die Wärmeleitfähigkeit wird gemäß DIN EN 18542:2020 bei einer Mitteltemperatur von 10 °C bestimmt, wobei das Fugendichtungsband um 50 % der ursprünglichen Höhe komprimiert ist. Es kann vorteilhaft sein, wenn das Verhältnis der Wärmeleitfähigkeiten des nicht imprägnierten zum imprägnierten Fugendichtungsband < 1:1 und/oder wobei die Differenz der vorgenannten Wärmeleitfähigkeiten vorzugsweise zwischen 0 und 0,01 W/mK liegt.

Es kann von Vorteil sein, wenn das imprägnierte Fugendichtungsband in seinem angegebenen Anwendungsbereich wenigstens einer der gängigen Brandnormen für den Baubereich entspricht, beispielsweise DIN 4102-B1 und/oder DIN 4102-B2.

## Patentansprüche

1. Erzeugnis, umfassend einen Polyurethanschaumstoff, der zumindest teilweise, vorzugsweise homogen mit einer Imprägniermasse imprägniert ist, **dadurch gekennzeichnet, dass** der Polyurethanschaumstoff zumindest teilweise auf Basis von Polyolen hergestellt ist, die zumindest teilweise auf Basis wenigstens eines nachwachsenden Rohstoffs und/oder zumindest teilweise auf Basis wenigstens eines Rezyklats erhalten werden, und/oder dass der Polyurethanschaumstoff zumindest teilweise auf Basis von zumindest teilweise aus CO₂ hergestellten Polyolen hergestellt ist.

2. Erzeugnis, nämlich Fugendichtungsband, umfassend einen oder mehrere in Längsrichtung verlaufende Abschnitte aus Schaumsoff, wobei wenigstens ein Abschnitt aus Polyurethanschaumstoff ausgebildet ist, **dadurch gekennzeichnet, dass** der Polyurethanschaumstoff zumindest teilweise auf Basis von Polyolen ausgeführt ist, die zumindest teilweise auf Basis wenigstens eines nachwachsenden Rohstoffs und/oder zumindest teilweise auf Basis wenigstens eines Rezyklats erhalten werden, und/oder dass der Polyurethanschaumstoff zumindest teilweise auf Basis von zumindest teilweise aus CO₂ hergestellten Polyole ausgeführt ist.

3. Erzeugnis nach Anspruch 2, **dadurch gekennzeichnet, dass** der Schaumstoff wenigstens eines Abschnitts zumindest teilweise, vorzugsweise homogen, mit einer Imprägniermasse imprägniert ist, wobei wenigstens eine Komponente der Imprägniermasse zumindest teilweise auf Basis von Polyolen ausgebildet ist, die zumindest teilweise auf Basis wenigstens eines nachwachsenden Rohstoffs und/oder zumindest teilweise auf Basis wenigstens eines Rezyklats erhalten werden, und/oder wobei wenigstens eine Komponente der Imprägniermasse zumindest teilweise auf Basis von zumindest teilweise aus CO₂ hergestellten Polyolen ausgebildet ist.

4. Erzeugnis nach zumindest einem der vorherigen Ansprüche, **dadurch gekennzeichnet, dass** der mit den erfindungsgemäßen Polyolen produzierte Polyurethanschaumstoff als Rohschaumstoff ein Raumgewicht von 20 bis 50 kg/m³ aufweist.

5. Erzeugnis nach zumindest einem der vorherigen Ansprüche, **dadurch gekennzeichnet, dass** der mit den erfindungsgemäßen Polyolen produzierte Polyurethanschaumstoff imprägniert ein Trockenraumgewicht von 30 bis 150 kg/m³ aufweist.

6. Erzeugnis nach zumindest einem der vorherigen Ansprüche, **dadurch gekennzeichnet, dass** der mit den erfindungsgemäßen Polyolen produzierte Polyurethanschaumstoff als Rohschaumstoff eine Stauchhärte von 2 bis 6 kPa, vorzugsweise von 3 bis 5 kPa, bestimmt gemäß DIN EN ISO 3386, aufweist.

7. Erzeugnis nach zumindest einem der vorherigen Ansprüche, **dadurch gekennzeichnet, dass** der mit den erfindungsgemäßen Polyolen produzierte Polyurethanschaumstoff als nicht komprimierter Rohschaumstoff oder als imprägnierter und nicht komprimierter Schaumstoff eine Luftdurchlässigkeit von 500 bis 1500 l/m²s, bestimmt gemäß DIN EN ISO 9237 bei einer Rohschaumdicke von 10 mm, einer Prüffläche von 20 cm² und einem Prüfdruck von 100 Pa als Prüfbedingungen, aufweist.

8. Erzeugnis nach zumindest einem der vorherigen Ansprüche, **dadurch gekennzeichnet, dass** der mit den erfindungsgemäßen Polyolen produzierte Polyurethanschaumstoff als nicht komprimierter Rohschaumstoff oder als imprägnierter und nicht komprimierter Schaumstoff eine Luftdurchlässigkeit von 100 bis 400 l/dm²min, bestimmt gemäß DIN EN ISO 7231 Verfahren A bei einer Rohschaumdicke von 50 mm, einer Prüffläche von 100 cm² und einem Prüfdruck von 100 Pa als Prüfbedingungen, aufweist.

9. Erzeugnis nach zumindest einem der vorherigen Ansprüche, **dadurch gekennzeichnet, dass** der mit den erfindungsgemäßen Polyolen produzierte Polyurethanschaumstoff als Rohschaumstoff eine Zugfestigkeit von 50 bis 300 KPa und/oder eine Bruchdehnung von 50 - 300 %, jeweils bestimmt gemäß DIN EN ISO 1798, aufweist.

10. Erzeugnis nach zumindest einem der vorherigen Ansprüche, **dadurch gekennzeichnet, dass** der mit den erfindungsgemäßen Polyolen produzierte Polyurethanschaumstoff als Rohschaumstoff einen Druckverformungsrest von 0 bis 25 %, vorzugsweise von ≤ 7 %, bestimmt gemäß DIN EN ISO 1856 Verfahren C bei 70°C, 50%, 22 Stunden als Prüfbedingungen, aufweist.

11. Erzeugnis nach zumindest einem der vorherigen Ansprüche, **dadurch gekennzeichnet, dass** der mit den erfindungsgemäßen Polyolen produzierte Polyurethanschaumstoff imprägniert einen Druckverformungsrest von 0 bis 25 %, vorzugsweise von ≤ 20 %, bestimmt gemäß DIN EN ISO 1856 Verfahren C bei 100°C, 90%, 4 Stunden als Prüfbedingungen, aufweist.

12. Erzeugnis nach zumindest einem der vorherigen Ansprüche, **dadurch gekennzeichnet, dass** das Fugendichtungsband eine oder mehrere Membranschichten aufweist.

13. Erzeugnis nach zumindest einem der vorherigen Ansprüche, **dadurch gekennzeichnet, dass** der mit den erfindungsgemäßen Polyolen produzierte Polyurethanschaumstoff ein überwiegend offenzelliger oder teilweise geschlossenzelliger oder offenzelliger Schaumstoff ist.

14. Erzeugnis nach zumindest einem der vorherigen Ansprüche, **dadurch gekennzeichnet, dass** wenigstens eine Membranschicht zumindest teilweise auf Basis von Polyolen hergestellt ist, die zumindest teilweise auf Basis wenigstens eines nachwachsenden Rohstoffs und/oder zumindest teilweise auf Basis wenigstens eines Rezyklats erhalten werden, und/oder dass wenigstens eine Membranschicht zumindest teilweise auf Basis von zumindest teilweise aus CO₂ hergestellten Polyolen produziert ist.
